# EUROPÄISCHE PATENTSCHRIFT

(11) **EP 1 717 364 B1**
(45) Veröffentlichungstag und Bekanntmachung des Hinweises auf die Patenterteilung: **16.09.2009**
(21) Anmeldenummer: 06006012.6
(22) Anmeldetag: 23.03.2006
(51) Int. Cl.: D06F 37/26

(54) **Kunststofflaugenbehälter für eine Waschmaschine**
Plastic tub for a washing machine
Cuve en matière plastique pour une machine à laver

(30) Priorität: 25.04.2005 DE 102005019414
(43) Veröffentlichungstag der Anmeldung: 02.11.2006
(73) Patentinhaber: Miele & Cie. KG, 33332 Gütersloh (DE)
(72) Erfinder: Hollenhorst, Matthias, 59556 Lippstadt (DE); Kratzsch, Andreas, Dr., 33719 Bielefeld (DE); Kuka, Thorsten, 33334 Gütersloh (DE); Nieder, Antje, 33332 Gütersloh (DE)

(56) Entgegenhaltungen:
- EP-A- 0 969 132
- EP-A- 1 528 136
- EP-A- 1 538 252

## Beschreibung

Die Erfindung betrifft Kunststofflaugenbehälter nach dem Oberbegriff des Anspruchs 1.

Aus der EP 1 528 136 A2 sind Kunststofflaugenbehälter für Waschmaschinen bekannt, die als zylinderförmig geformtes Behältnis die Trommel umgeben. Dabei ist in einer der Stirnseitenwänden ein metallisches Lagerkreuz mit einer Nabe zur Aufnahme einer Antriebswelle für die Trommel in der Kunststoffmasse eingebunden. Durch das Umspritzen des gusseisernen Lagerkreuzes kommt es im Laugenbehälter zu erheblichen Eigenspannungen, die daraus resultieren, dass der Kunststoff von der Erstarrungstemperatur auf Raumtemperatur abkühlt und dabei schrumpft. Die Kräfte, die dadurch auf das Lagerkreuz einwirken, sind derart groß, dass sich das Lagerkreuz verformen kann. Außerdem können die Kräfte zu Rissen in der Behälterwand führen, die zu Undichtigkeiten und einer instabilen Anbindung des Lagerkreuzes führen.

Beim Umspritzen großvolumiger Metallteile treten generell nach dem Erkalten des Kunststoffes erhebliche Eigenspannungen im Kunststoff auf, die auch zu Spannungen im Metallteil führen. Dies kann unter Umständen sogar zu Deformationen des Metallteils führen, und somit den Verbund unbrauchbar machen. Es besteht zwar die Möglichkeit, beispielsweise in Erwärmung des Metallteils, dass sich Metallteil und Kunststoff beim Erkalten im gleichen Maß zusammenziehen, und dass beide Teile spannungsfrei bleiben. Dies hat jedoch den Nachteil, dass erhebliche Energiekosten anfallen, und die Handhabung zur Herstellung eines eingebundenen Lagerkreuzes in einem Kunststofflaugenbehälter dadurch wesentlich erschwert wird. Ein weiteres Problem ist die unterschiedliche Erwärmung des Lagerkreuzes und des Laugenbehälters während des Betriebs. Hierbei können aufgrund der unterschiedlichen Temperaturausdehnungskoeffizienten ebenfalls Materialspannungen innerhalb der Behälterwand mit den bereits erwähnten Problemen auftreten.

Aus der GB 2 333 300 A ist ein Kunststofflaugenbehälter mit einer umspritzten Lagernabe bekannt. Hierbei sind von der Nabe ausgehend Verstärkungsrippen angeformt, die die Kräfte von der Nabe möglichst großflächig auf die Stirnwand des Laubenbehälters übertragen bzw. verteilen. Hierbei sind jedoch nach dem Erkaltungsprozess während der Herstellung des Kunststofflaugenbehälters Materialspannungen in den Übergangsbereichen zwischen der Nabe und dem Kunststoffteil möglich. Auch können die Materialanhäufungen im Bereich der Rippen während des Erkaltens unterschiedlich schrumpfen und somit in den Übergangsbereichen zu unerwünschten Kraftspitzen bzw. Materialspannungen führen. Zu hohe Materialspannungen können zu unerwünschten Rissen mit einer daraus folgenden Undichtigkeit des Laugenbehälters führen.

Aus der EP 0 835 729 B1 ist ein Kunststofflaugenbehälter für eine Waschmaschine bekannt, der auf einer Stirnwand kreisförmige Oberflächenvertiefungen enthält. Diese Oberflächenvertiefungen sind gitterartig mit Rippen versehen. Die kreisförmigen Oberflächenvertiefungen haben eine größere Wärmeleitung als der verbleibende Teil der Stirnwand bzw. Behälterwand.

Der Erfindung stellt sich somit das Problem, einen Kunststofflaugenbehälter für eine Waschmaschine, mit einem eingebundenen Lagerkreuz oder Lagernabe aus Metall zu schaffen, bei dem die Haltbarkeit verbessert und die Rissanfälligkeit reduziert wird.

Erfindungsgemäß wird dieses Problem mit den Merkmalen des Anspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen darin, dass die Eigenspannungen innerhalb, im wesentlichen in der Ebene der Behälterwand des Kunststofflaugenbehälters, durch das Einbringen sickenartiger Einformungen, auch als Entlastungsprofile bezeichnet, reduziert werden, so dass sich die Haltbarkeit bzw. Belastbarkeit des Kunststofflaugenbehälters bzw. der Behälterwand erhöht.

Die Einformungen sind örtlich begrenzt, wodurch nur an den Stellen eine partielle Elastizität erreicht wird, an denen die größten Kräfte oder Kraftspitzen auftreten. Diese Kraftspitzen treten häufig in durch stabilisierende Mittel eingefasste bzw. umschlossene Flächen der Behälterwand auf. Als stabilisierende Mittel sind beispielsweise Stege oder ein im Kunststoff eingesetztes Lagerkreuz denkbar. Die Einformungen sind derart gestaltet, dass die Behälterwand im Schnittprofil eine Mulde darstellt, die durch ihre Formgebung in Verlaufsrichtung der Behälterwand eine Elastizität aufweist. Die verbleibenden nicht durch Einformungen verformten Bereiche der Behälterwand umgeben die Einformung bzw. das Entlastungsprofil vollständig, bzw. zumindest im Wesentlichen vollständig und bewirken somit einen größtmöglichen Erhalt der Stabilität. Hierdurch wird erreicht, dass Kräfte aufgrund von Spannungen in Verlaufsrichtung der Ebene der Behälterwand durch diese hinsichtlich Dehnung und / oder Stauchung verformbaren Einformungen aufgenommen bzw. ausgeglichen werden. Kräfte, die durch das schrumpfende Kunststoffmaterial in das umspritzte Metallteil eingeleitet werden, können ebenso reduziert werden. Dadurch wird einerseits das Metallteil selbst entlastet, aber auch die Spannungen, die sich im Kunststoff aufbauen, werden durch die federnde Wirkung der elastischen Einformungen vermindert.

Die Geometrie des Profils ist für die Funktion entscheidend, da die federnde Wirkung quer zur Ausformung am größten ist. In Längsrichtung bzw. bei Biegebeanspruchung kann das Profil wie eine Versteifungsrippe wirken. Die optimale Geometrie lässt sich finden, wenn die Eigenspannungen im Bauteil bekannt sind. Da dies jedoch selten der Fall ist, wurden die Profile so ausgeführt, dass sie für vorzugsweise mehrere Richtungen der Kraftverläufe gut geeignet sind. So werden gemäß der Erfindung die im Bereich der Behälterwand vorgesehenen Entlastungsprofile mäander-, stern-, oval- kreis- oder kugelförmig ausgebildet, wobei das kugelförmige Entlastungsprofil nur einem Abdruck einer teilweise eingedrückten Kugel entspricht. Insbesondere das kugelförmige Entlastungsprofil stellt eine Eigenspannungsaufnahme in nahezu alle Richtungen in der Ebene der Behälterwand bereit und ist somit für nahezu alle Dehnungs- oder Schrumpfungsrichtungen gut geeignet.

In einer zweckmäßigen Ausführung ist die Stärke der Behälterwand im Bereich der Entlastungsprofile so dimensioniert, dass sie der Stärke der verbleibenden unprofilierten Bereiche entspricht. Dadurch, dass die Entlastungsprofile eine partielle Umlenkung der Ausrichtung der Behälterwand bilden, werden auch die Kräfte aufgrund interner Materialspannungen entsprechend des Verlaufs der Entlastungsprofile definiert umgelenkt. Hierdurch werden im Material der Behälterwand auftretende Spannungen bzw. Kraftspitzen vermieden.

In einer alternativen Ausführung des Kunststofflaugenbehälters ist die Stärke der Behälterwand im Bereich der Entlastungsprofile geringer ist als die Stärke der verbleibenden unprofilierten Bereiche dimensioniert. Damit wird eine mögliche Verformung aufgrund der durch die internen Materialspannungen verursachten Kräften überwiegend auf den Bereich der Entlastungsprofile begrenzt. In diesem Bereich ist die Verformbarkeit aufgrund der reduzierten Wandstärke erhöht.

In einer zweckmäßigen Ausführungsform ist die Wandstärke im Bereich der Entlastungsprofile so gewählt, dass sie der Hälfte bis 2/3 der unprofilierten Bereiche der Behälterwand entspricht.

Bei einer reduzierten Wandstärke ist es vorteilhaft, einen kontinuierlich verlaufenden oder sanften Übergang zwischen der ursprünglichen größeren Wandstärke und der reduzierten Wandstärke zu schaffen. Der Übergang befindet sich jeweils im Bereich der Entlastungsprofile, jedoch kann er auch in den benachbarten unprofilierten Bereich ragen. Durch einen kontinuierlichen Übergang bzw. Verlauf zwischen normaler und reduzierter Wandstärke werden Kraftspritzen in diesem Übergangsbereich vermieden, wodurch die Haltbarkeit des Laugenbehälters erhöht wird.

Der Einsatz der genannten Entlastungsprofile bietet sich bei Kunststofflaugenbehältern an, die umspritzte Komponenten, beispielsweise eine Nabe oder Ausgleichsgewichte aus anderen Materialien enthalten, die aufgrund ihres zeitlich unterschiedlichen Abkühlverhaltens Eigenspannungen in der Behälterwand verursachen können. Eine weitere Ursache für Eigenspannungen in der Behälterwand sind unterschiedliche Stärken des Kunststoffs, beispielsweise Verstärkungsrippen oder einstückig angeformte Komponenten. Dies ist vor allem an Stellen mit unterschiedlichen Wandstärken der Fall, die funktionsbedingt bzw. aus Festigkeitsgründen nicht geändert werden können, zum Beispiel steife Anbindungspunkte. Für diesen Fall ist der Einsatz der oben beschriebenen Entlastungsprofile ebenfalls vorteilhaft.

Ein Ausführungsbeispiel der Erfindung wird anhand der nachstehenden Figuren 1 bis 6 näher erläutert; dabei zeigen:
- Figur 1: eine perspektivische Ansicht eines Kunststofflaugenbehälters;
- Figur 2: eine weitere Ausführungsform eines Kunststofflaugenbehälters gemäß der Erfindung;
- Figur 3: mäanderförmige Entlastungsprofile;
- Figur 4: sternförmige Entlastungsprofile;
- Figur 5: ovalförmige Entlastungsprofile und
- Figur 6: kugelförmige Entlastungsprofile.

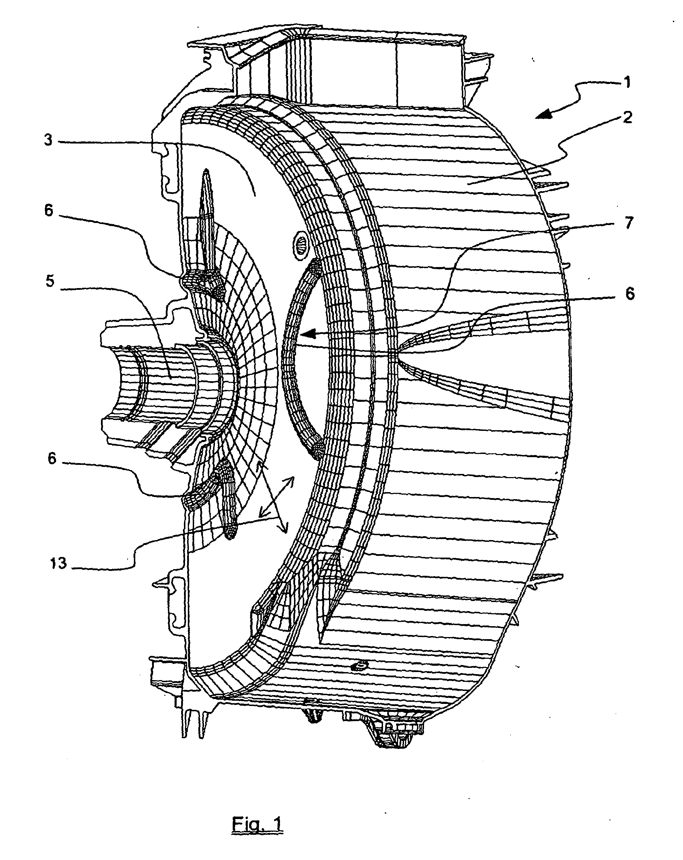

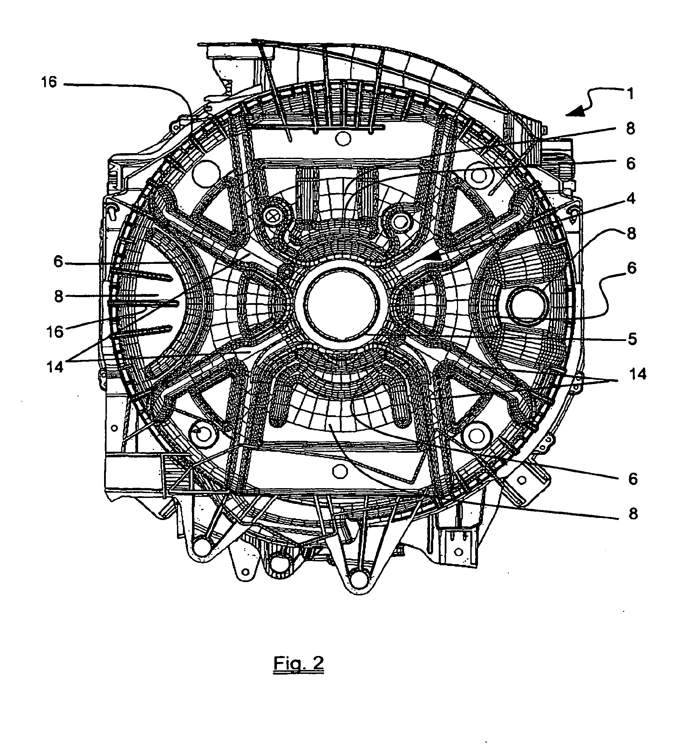

Figur 1 zeigt in der perspektivischen Ansicht einen Kunststofflaugenbehälter 1 für eine Waschmaschine, wobei in dem Kunststofflaugenbehälter 1 eine nicht näher dargestellte Trommel drehbar angeordnet ist. Hierbei handelt es sich um eine Ansicht in das Innere eines aufgeschnittenen Kunststofflaugenbehälters 1. Der Kunststofflaugenbehälter 1 umfasst dabei im wesentlichen einen zylinderförmigen Mantel 2 und zumindest eine Stirnseitenwand 3, wobei in einer Stirnseitenwand 3 ein metallisches Lagerkreuz 4 mit einer Nabe 5 zur Aufnahme einer Antriebswelle für die Trommel in der Kunststoffmasse eingebunden ist. Dies ist insbesondere in der Figur 2 dargestellt.

Wie insbesondere aus den perspektivischen Darstellungen der Figuren 1 und 2 zu erkennen ist, sind auf der Stirnseitenwand 3 Entlastungsprofile 6 vorgesehen, die die entstehenden Eigenspannungen auffangen sollen, wenn der Kunststoff von der Erstarrungstemperatur auf Raumtemperatur abkühlt und dabei schrumpft. Die Stirnseitenwand 3 besitzt als stabilisierende Mittel einstückig angeformte Stege und ein in der Kunststoffmasse eingebettetes Lagerkreuz 4 mit einer zentralen Nabe 5 und von der Nabe 5 ausgehend radial nach außen verlaufende Streben 14. Die Entlastungsprofile 6 sind jeweils in den von den stabilisierenden Mitteln 14, 16 begrenzten Flächen 8 angeordnet und sind von der verbleibenden ebenen Wand innerhalb dieser Fläche 8 vollständig umgeben. Das Entlastungsprofil 6 hat eine zum Behälterinneren weisende Ausbuchtung und in der Ebene 13 der Stirnseitenwand 3 einen gekrümmten Verlauf mit begrenzter Länge. Eine Ausbuchtung zum Behälteräußeren ist ebenfalls denkbar. Die Pfeile 13 deuten beispielhaft nur vier Verlaufsrichtungen in der Ebene der Stirnseitenwand 3 an, die jedoch nicht limitierend auf weitere Verlaufsrichtungen für die Entlastungsprofile 6 gelten.

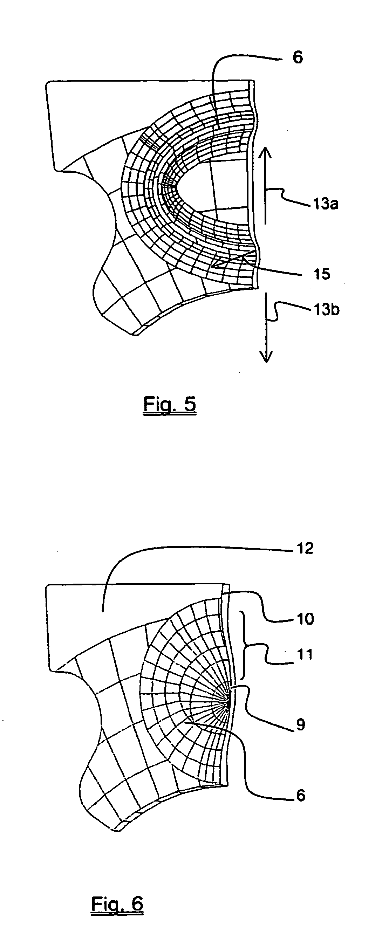

Die Funktionsweise eines Entlastungsprofils 6 ist in Figur 5 verdeutlicht. In der Schnittdarstellung ist das muldenförmige Entlastungsprofil 6 verdeutlicht. Innerhalb der Behälterwand 3 auftretende Spannungen verursachen in diesem Beispiel Kräfte in Richtung 13a und weitere innere Kräfte in entgegengesetzter Richtung 13b. Die muldenförmige Ausbuchtung des Entlastungsprofils 6 ermöglicht eine partielle Verschiebung der Behälterwand 3 in Richtung der angreifenden Kräfte 13a und 13b, wodurch das Zentrum bzw. der Scheitelpunkt 9 des Entlastungsprofils 6 in Richtung 15 bewegt und die Muldentiefe verringert wird. Den angreifenden Kräften 13a und 13b wird die hieraus erzwungene Bewegung bzw. Ausdehnung in Verlaufsrichtung der Ebene 13 ermöglicht, wodurch innere Spannungen vermindert oder vollständig abgebaut werden.

In Fig. 2 ist die Stirnwand mit dem im Kunststoff eingebettetem Lagerkreuz 4 in einer Draufsicht dargestellt. In den Bereichen 8, die durch die Arme 14 des Lagerkreuzes 4 begrenzt sind, können im Material der Behälterwand 3 Spannungen auftreten, verursacht durch die unterschiedlichen Temperaturausdehnungskoeffizienten des metallischen Lagerkreuzes 4 und des Kunststoffs. Die Verläufe der Entlastungsprofile 6 sind so gewählt, dass sie einen möglichst umfassenden Bereich für eventuell auftretende Materialspannungen oder Kraftspitzen erreichen und diese Kraftspitzen durch partielle Verformung innerhalb der Entlastungsprofile 6 absorbieren können.

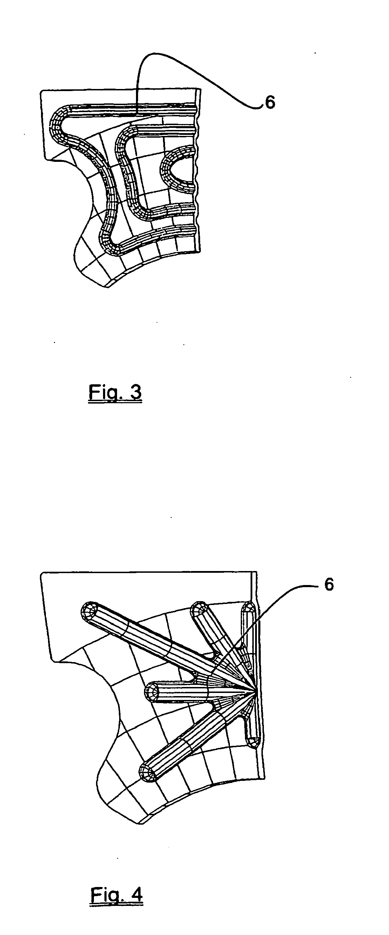

Die entsprechenden Formgebungen der Entlastungsprofile 6, die in der Spritzgussform eingebracht sind, sind beispielhaft in den Figuren 3, 4, 5 und 6 näher dargestellt. Die Entlastungsprofile 6 können ebenso vorzugsweise an der Stirnwandseite 3 des Behälters 2 vorgesehen sein, in der das metallische Lagerkreuz 4 eingebunden ist. Die Entlastungsprofile 6 können dabei, wie in der Figur 3 dargestellt ist, mäanderförmig ausgebildet sein. Eine andere Variante zeigt die Figur 4, in der das Entlastungsprofil 6 sternförmig ausgebildet ist, wobei die Figur 5 als eine zweckmäßige Variante einen in der Ebene ovalen Verlauf für ein Entlastungsprofil 6 zeigt.

Die Figur 6 zeigt ein in der Ebene eingebrachtes kugelförmiges Entlastungsprofil 6. In dem in Figur 6 dargestellten Schnitt ist zu erkennen, dass die Wandstärke im Bereich des Scheitelpunktes 9 innerhalb des Entlastungsprofils 6 geringer ausgeführt ist, als die Wandstärke im verbleibenden unprofilierten Bereich 10. Die Wandstärke ist im Übergangsbereich 11 stetig geringer werdend ausgeführt. Somit werden bei einer partiellen Verformung innerhalb des Entlastungsprofils 6 Spannungsspitzen in diesem Übergangsbereich 11 vermieden. Durch die Formgebung des Entlastungsprofils 6 und/oder durch die Verringerung der Wandstärke wird in diesem Bereich eine erhöhte Elastizität gegenüber dem restlichen Bereich 12 der Behälterwand erreicht.

## Patentansprüche

1. Kunststofflaugenbehälter (1) für eine Waschmaschine zur Aufnahme einer darin drehbaren Trommel, wobei der Kunststofflaugenbehälter (1) eine Behälterwand mit einem zylinderförmigen Mantel (2), und zumindest eine den Mantel (2) verschließende Stirnseitenwand (3) besitzt, wobei in der Stirnseitenwand (3) ein metallisches Lagerkreuz (4) mit einer Nabe (5) zur Aufnahme einer Antriebswelle für die Trommel und zumindest einer von der Nabe (5) ausgehenden, im wesentlichen radial nach außen verlaufenden Strebe (14) in der Kunststoffmasse eingebunden ist,
**dadurch gekennzeichnet,**
**dass** in der Stirnseitenwand (3) im Verlauf der Ebene (13) in den durch die Nabe (5) und / oder Streben (14) begrenzten Flächen (8) örtlich begrenzte sickenartige Entlastungsprofile (6) eingebracht sind, die jeweils im Schnitt im wesentlichen eine Mulde darstellen, welche durch einen verbleibenden ebenen Bereich der Fläche (8) zumindest im Wesentlichen vollständig umschlossen sind, wobei die Entlastungsprofile (6) in Verlaufsrichtung (13) der Ebene dehn- oder stauchbar sind.

2. Kunststofflaugenbehälter (1) nach Anspruch 1,
**dadurch gekennzeichnet,**
**dass** die Entlastungsprofile (6) mäander-, stern-, oval- oder kugelförmig ausgebildet sind.

3. Kunststofflaugenbehälter (1) nach Anspruch 2,
**dadurch gekennzeichnet,**
**dass** die Stärke der Stirnseitenwand (3) im Bereich der Entlastungsprofile (6) im wesentlichen der Stärke (10) der verbleibenden unprofilierten Bereiche (12) entspricht.

4. Kunststofflaugenbehälter (1) nach einem der Ansprüche 1 bis 3,
**dadurch gekennzeichnet,**
**dass** die Stärke (9) der Stirnseitenwand (3) im Bereich der Entlastungsprofile (6) geringer ist als die Stärke (10) der verbleibenden unprofilierten Bereiche (12).

5. Kunststofflaugenbehälter (1) nach Anspruch 4,
**dadurch gekennzeichnet,**
**dass** die Stärke (9) der Stirnseitenwand (3) im Bereich der Entlastungsprofile (6) 2/3 bis 1/2 der Stärke (10) der verbleibenden unprofilierten Bereiche (12) entspricht.

6. Kunststofflaugenbehälter (1) nach Anspruch 4 oder 5,
**dadurch gekennzeichnet,**
**dass** die Stärke (10) der Stirnseitenwand (3) in einem Übergangsbereich (11) innerhalb des Entlastungsprofils (6) kontinuierlich auf die innerhalb des Entlastungsprofils (6) bestimmte geringere Stärke (9) reduziert wird.

7. Kunststofflaugenbehälter (1) nach einem der Ansprüche 4 bis 6,
**dadurch gekennzeichnet,**
**dass** das Entlastungsprofil (6) nutartig in der Stirnseitenwand (3) eingeprägt ist.

## Claims

1. A plastic suds container (1) for a washing machine for receiving a drum rotatable therein, the plastic suds container (1) having a container wall including a cylindrical shell (2) and at least one end wall (3) closing the shell (2), where in the end wall (3), a metallic cross-shaped bearing member (4) including a hub (5) for receiving a drive shaft for the drum and at least one brace (14) extending substantially radially outwardly from the hub (5) are incorporated in the plastic mass,
**characterized in, that** in the end wall (3), channel-like relief profiles (6) are formed in the extension of the plane (13) in limited regions within the areas (8) bounded by the hub (5) and/or braces (14), said channel-like relief profiles each substantially constituting a hollow as seen in the cross-section, said hollow being at least substantially completely surrounded by the remaining flat region of the area (8), said relief profiles (6) being expandable or compressible in the direction of extension (13) of the plane in the direction of extension.

2. The plastic suds container (1) as recited in Claim 1,
wherein the relief profiles (6) are meander-shaped, star-shaped, oval, circular, or spherical in shape.

3. The plastic suds container (1) as recited in Claim 2,
wherein the thickness of the end wall (3) in the area of the relief profiles (6) is substantially equal to the thickness (10) of the remaining unprofiled areas (12).

4. The plastic suds container (1) as recited in one of Claims 1 through 3,
wherein the thickness (9) of the end wall (3) in the area of the relief profiles (6) is smaller than the thickness (10) of the remaining unprofiled areas (12).

5. The plastic suds container (1) as recited in Claim 4,
wherein the thickness (9) of the end wall (3) in the area of the relief profiles (6) is two-thirds to one-half of the thickness (10) of the remaining unprofiled areas (12).

6. The plastic suds container (1) as recited in Claim 4 or 5,
wherein in a transition region (11) within the relief profile (6), the thickness (10) of the end wall (3) is continuously reduced to the particular smaller thickness (9) within the relief profile (6).

7. The plastic suds container (1) as recited in one of Claims 4 through 6,
wherein the relief profile (6) is formed into the end wall (3) in the manner of a groove.

## Revendications

1. Cuve à lessive (1) en matière plastique, destinée à un lave-linge et conçue pour recevoir un tambour pouvant y effectuer des rotations, ladite cuve à lessive (1) en matière plastique possédant une paroi à enveloppe cylindrique (2), et au moins une paroi latérale (3) obturant ladite enveloppe (2), sachant qu'un palier métallique cruciforme (4), muni d'un moyeu (5) affecté à la réception d'un arbre d'entraînement du tambour, et d'au moins une entretoise (14) partant dudit moyeu (5) et s'étendant pour l'essentiel vers l'extérieur, dans le sens radial, est noyé dans la masse de matière plastique,
**caractérisée par le fait**
**que** des profils de délestage (6) du type moulures à délimitation localisée sont façonnés dans la paroi latérale (3), suivant le tracé du plan (13), dans les surfaces (8) délimitées par le moyeu (5) et/ou par les entretoises (14), lesdits profils matérialisant respectivement pour l'essentiel, en coupe, une auge ceinturée, au moins pour l'essentiel intégralement, par une région plane subsistante de la surface (8), lesdits profils de délestage (6) pouvant subir, dans la direction de l'étendue dudit plan (13), une expansion ou une déformation par écrasement.

2. Cuve à lessive (1) en matière plastique, selon la revendication 1,
**caractérisée par le fait**
**que** les profils de délestage (6) sont réalisés en forme de méandres, en forme d'étoile, de forme ovale ou de forme sphérique.

3. Cuve à lessive (1) en matière plastique, selon la revendication 2,
**caractérisée par le fait**
**que** l'épaisseur de la paroi latérale (3), dans la zone des profils de délestage (6), correspond pour l'essentiel à l'épaisseur (10) des régions restantes (12) non profilées.

4. Cuve à lessive (1) en matière plastique, selon l'une des revendications 1 à 3,
**caractérisée par le fait**
**que** l'épaisseur (9) de la paroi latérale (3), dans la zone des profils de délestage (6), est moindre que l'épaisseur (10) des régions restantes (12) non profilées.

5. Cuve à lessive (1) en matière plastique, selon la revendication 4,
**caractérisée par le fait**
**que** l'épaisseur (9) de la paroi latérale (3), dans la zone des profils de délestage (6), correspond à entre 2/3 et 1/2 de l'épaisseur (10) des régions restantes (12) non profilées.

6. Cuve à lessive (1) en matière plastique, selon la revendication 4 ou 5,
**caractérisée par le fait**
**que** l'épaisseur (10) de la paroi latérale (3), dans une zone de transition (11) à l'intérieur du profil de délestage (6), est réduite en continu jusqu'à atteindre l'épaisseur moindre (9), déterminée à l'intérieur dudit profil de délestage (6).

7. Cuve à lessive (1) en matière plastique, selon l'une des revendications 4 à 6,
**caractérisée par le fait**
**que** le profil de délestage (6) est empreint dans la paroi latérale (3), à la manière d'une rainure.
